Europäisches Patentamt

European Patent Office

Office européen des brevets

(11) Publication number: **0 615 142 A1**

## EUROPEAN PATENT APPLICATION

(21) Application number: **94102566.0**

(22) Date of filing: **21.02.94**

(51) Int. Cl.5: **G02B 5/18**, G02B 27/00, G02B 3/00

(30) Priority: **08.03.93 US 27337**

(43) Date of publication of application:
**14.09.94 Bulletin 94/37**

(84) Designated Contracting States:
**DE FR GB NL**

(71) Applicant: **CORNING INCORPORATED**
**Houghton Park**
**Corning New York 14831 (US)**

(72) Inventor: **Borrelli, Nicholas Francis, Corning**
**Incorporated**
**Patent Department,**
**SP FR 02-12**
**Corning, NY 14831 (US)**

(74) Representative: **Boon, Graham Anthony et al**
**Elkington and Fife**
**Prospect House**
**8 Pembroke Road**
**Sevenoaks, Kent TN13 1XR (GB)**

(54) **Combined optical element.**

(57) A refractive/diffractive optical element (10) for producing a wavefront that closely approximates a perfect spherical wavefront, the optical element (10) comprising at least one spherical surface (12) and a diffraction grating (24) in opposed relationship to that spherical surface, and aligned therewith, the grating (24) being composed of successive, annular steps (26) at predetermined distances from the center of the grating, whereby the optical element (10) is capable of producing a wavefront that is corrected and that is capable of diffraction-limited performance.

*Fig. 4*

An optical element combining a spherical surface and a diffraction grating.

It is known to make lens arrays of a pattern of spherical lenses forming a surface of a substrate by forming a spherical surface on one end of each of a plurality of rods, which are then combined, as by bundling and fusion or sealing; or, as in U.S. Patents 4,572,611 and 4,952,026.

In some important applications, such as coupling light from a laser diode array to a waveguide fiber array, the light gathering efficiency is crucial. This latter efficiency is measured by the numerical aperture, NA, of the lens. For ease of discussion, this will be taken as the radius of the lens divided by its focal length. In general, values on the order of 0.5 are required, but the processes described by U.S. Patent 4,572,611 achieve only half that requirement

Furthermore, the light must be efficiently coupled to the output fiber array. The size of the image formed by a lens must conform to that of the single mode optical fiber or detector. This often requires near diffraction-limited performance wherein the size of the focused spot is limited only by diffraction and not by geometric optic effects. The theoretical diffraction-limited spot size is given by the expression,

$$S = 1.22 \frac{\lambda}{NA}$$

where $\lambda$ is the wavelength of light and NA is the numerical aperture. The requirements of both high NA and diffraction-limited performance make the use of conventional spherical lenses inefficient.

As the NA increases, the radius of curvature of the lens decreases. The deviation of the wavefront produced by a spherical lens, compared to a perfect spherical wavefront, which would yield the diffraction-limited spot size, then increases to the third power of the radial distance from the center of the lens.

This deviation is usually dealt with in terms of specific types called aberrations. The particular one which most impacts the application discussed above is termed spherical aberration. The rays imaged from near the top of the lens, marginal rays, come to a focus closer than those which come from near the center of the lens, paraxial rays. The net result is a blurring of the image.

There are a number of ways one can approach the problem of correcting for the aberration. The classic solution is to use a number of spherical lens surfaces, that is, essentially a compound lens approach. This can be done with the lens arrays produced by the Bellman et al. processes. There, two bi-convex arrays are stacked together, thus providing four refracting surfaces. One drawback is that the arrays must be fabricated separately. They must then be precisely attached so that the alignment is maintained.

Another method is to use aspheric surfaces but this is not possible in the process of U.S. Patent 4,952,026 due to the impossibility to achieve a controllable, predetermined, surface-curve formation other than spherical.

Another approach would be to utilize a diffractive effect, rather than refraction, to produce the spherical wavefront, by creating a circular diffraction grating on a substrate which gives rise to a spherical wavefront, also called the Binary Optic approach because the desired wavefront can be approximated by a diffraction grating pattern in a staircase design of stepped grooves or multiples thereof. The advantage of this approach is that it involves the technology of the silicon microelectronic industry. In addition, the wavefront corrections can be built into the grating design in a straightforward manner. The drawback is that the spacing of the outermost rings of the grating may be very close, that is, may be on the order of wavelengths of light as expressed by,

$$\delta r(outer) = \frac{\lambda}{NA}$$

For the application where an NA of 0.5 is desired, the spacing becomes a limitation.

On general state of the art see also "Binary Optics", Scientific America, 1992, pages 92-97, and "Fabrication of Micro Lenses Using Electron-Beam Lithography", by Fujita et al., OPTICS LETTERS, Vol. 6, No. 12, pp. 613-615.

A purpose of my invention is to provide an optical element to produce a wavefront that closely approximates a perfect spherical wavefront yielding a diffraction-limited performance. Another purpose is to provide a means for correcting for the aberrations that occur in a wavefront from a conventional spherical lens. Another purpose is to provide a novel refractive/diffractive light transmitting device. Another purpose is to provide such device in an integral body. Another purpose is to provide an improvement on the optical elements described in United States Patents No. 4,572,611 and No. 4,952,026.

## SUMMARY OF THE INVENTION

The article of my invention is a refractive/diffractive optical element for producing a wavefront that closely approximates a perfect spherical wavefront, the element comprising at least one spherical surface and a diffraction grating in opposed relationship to that spherical surface, and aligned therewith, the grating being composed of successive, stepped, annular surfaces at predetermined distances from the center of the grating, whereby the optical element is capable of producing a wavefront that is corrected and that is thereby capable of diffraction-limited performance.

The invention further contemplates a method of producing a spherical wavefront, the method comprising passing a light beam through a conventional spherical surface to produce a phase front which deviates from a perfect spherical wavefront by some extent due to spherical aberration, and correcting for such aberration by passing the light from the conventional spherical surface through a diffraction grating composed of successive, stepped, annular surfaces etched at predetermined radial distances from the center of the grating. The exact spacing of the grating structure is calculated from the mathematical expression for the difference between the wavefront emanating from a spherical surface and a spherical wavefront.

## BRIEF DESCRIPTION OF THE DRAWINGS

In the accompanying drawing:
FIGURE 1 is a view in cross-section of an optical element as disclosed in the Bellman et al. patents.
FIGURE 2 is a view in cross-section showing the optical element of FIGURE 1 modified in accordance with the present invention.
FIGURE 3 is a top plan view of one unit in the optical element of FIGURE 2 further modified in accordance with the present invention,
FIGURE 4 is a view in cross-section taken along line 4-4 in FIGURE 3 further showing the modification of FIGURE 3,
FIGURES 5A, 5B and 5C are views in cross-section illustrating steps in a method of producing the invention, and
FIGURES 6A, 6B and 6C are views in cross-section illustrating further steps in the method of FIGURES 5A-C.

## DESCRIPTION OF THE INVENTION

The present invention is based on combining the phenomena of refraction and diffraction to produce a wavefront that approaches a spherical wavefront. Initially, a light beam is transmitted through a spherical lens which alters the incident wavefront. This wavefront emanating from the spherical surface, as explained earlier, is not a spherical wavefront. That is, it differs from a perfect spherical wavefront by an amount referred to as an aberration.

The uncorrected spherical wavefront is then transmitted through a diffraction grating designed to essentially compensate for the aberration. This produces a corrected wavefront that approaches as nearly as possible a perfect spherical wavefront.

Mathematically, this correction can be obtained from the following formulations. The representation of a spherical wave can be expressed as,

$$\phi^{(r)} = \frac{2\pi}{\lambda}[f-(f^2 + r^2)^{1/2}]$$

where $\phi$ is the phase of the spherical wave, $\lambda$ is the wavelength of light, f is the focal length of the lens and r is the radial distance from the axis normal to the light direction. The phase of the wavefront produced by a spherical surface is quadratic in the radial distance and can be expressed as,

$$\phi(lens) = -\left(\frac{2\pi}{\lambda}\right)\left(\frac{r^2}{f}\right)$$

The difference between these two equations represents the deviation of the wavefront from a spherical one. Expanding the above equation for the spherical wavefront in a power series in the radial distance r, and subtracting the wavefront expression yielded by the lens, gives the mathematical expression for the

deviation,

$$\phi(\text{dev}) = (\frac{2\pi}{\lambda})(\frac{r^4}{8f^3})+ \ (\text{higher order terms}).$$

This equation then determines the phase that must be produced by the correcting surface.

A curve, corresponding to this equation, represents the ideal curvature to impart to a correcting surface. To achieve this ideal in glass on a commercial basis is not practical. However, an approximation, that can be produced utilizing technology familiar in microelectronics, is adequate.

The first step is to create a curve corresponding to the equation above that represents the wavefront deviation. The steep portion of the curve is then collapsed to take the form of a Fresnel lens. A further approximation is then made by converting the Fresnel-type curve into steps that create a grating pattern as shown, infra, in the drawing.

A grating structure, made to replicate this shape, has a series of steps of equal depth. The depth must be some fraction of a wave, and thus is somewhat arbitrary. However, the larger the number of steps, the more precise the approximation to the actual surface, and the higher the efficiency of the grating.

One proceeds to calculate the spacing of the grooves by demanding that each of the radii, starting from the outside of the pattern, radius $r_0$, follows the formula,

$$r_0^4 - r_i^4 = (8f^3)(\frac{\lambda}{k})$$

where k is an integer and f is the focal length of the lens. One continues this iteration,

$$r_i^4 - r_{i-1}^4 = (8f^3)(\frac{\lambda}{k})$$

until one reaches the center of the lens. The physical depth of the groove is determined by an expression wherein a depth of $\lambda/(n-1)$ corresponds to one wave, with n being the refractive index of the glass.

The following constitutes an example. Lens radius is 0.1125 mm, focal length is 0.3 mm, wavelength is 1000nm, and the value of k is 8. The radii of the grating, in millimeters, are,

$r_0 = 0.1125$
$r_1 = 0.1074$
$r_2 = 0.0943$
$r_3 = 0.0850$
$r_4 = 0.0708$

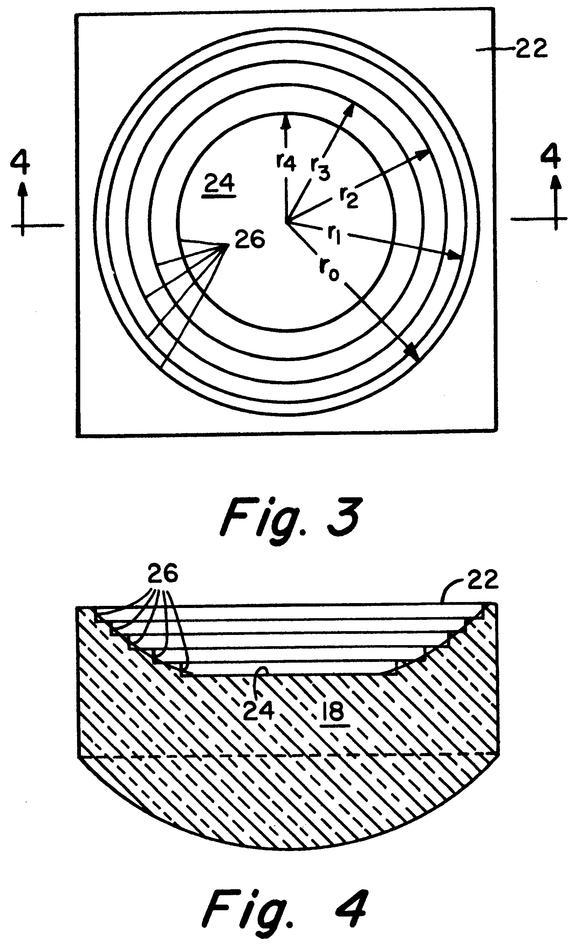

with each groove depth corresponding to 0.25 $\mu$m. This example is illustrated in, and furnishes the basis for, FIGURES 3 and 4, discussed subsequently.

The invention further contemplates producing an integral optical element adapted to effect the correction just described. This element has an array of spherical microlenses formed on one surface of a substrate. A corresponding array of diffractive gratings, one diffractive grating per spherical lens, is formed on the opposite surface of the substrate.

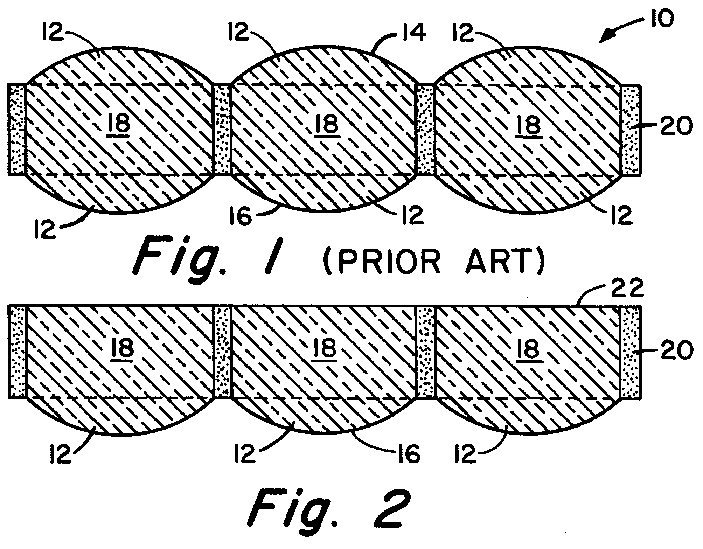

Referring to the accompanying drawings, FIGURE 1 is a view in cross-section of an optical element 10 as disclosed in the Bellman et al. patents. Optical element 10 comprises an array of raised spherical microlenses 12 on both the upper side 14 and the lower side 16 of element 10. Each opposed lens pair 12-12 is connected with a clear cylinder 18. Surrounding the cylinders, and optically isolating each, is an opaque glass matrix 20.

As shown in FIGURE 1, there is a set of three microlenses 12 formed on both the top side 14 and the bottom side 16 of element 10. It will be appreciated that single microlenses could be formed if desired. More commonly, however, arrays of lenses are formed that are limited in number only by the function to be performed, the ability to mask the substrate surface, and the amount of surface available on which to form the microlenses. For example, it is possible to produce thousands of lenses on a four square inch (25.8 sq. cm) substrate surface.

For present purposes, upper surface 14 of element 10 is ground and polished to provide a plano surface 22 as shown in FIGURE 2. That FIGURE is a view in cross-section corresponding to FIGURE 1, except for the change in upper surface 14.

FIGURE 3 is a top plan view of one microlens section in element 10 showing a diffraction grating pattern 24 etched in plano surface 22. Grating pattern 24 is composed of successive, annular steps 26.

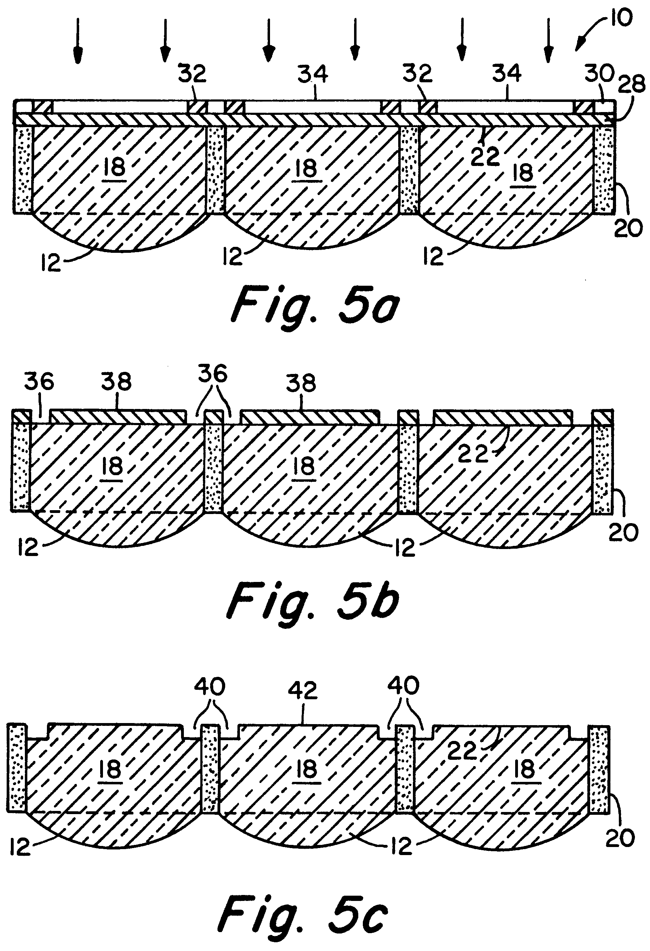

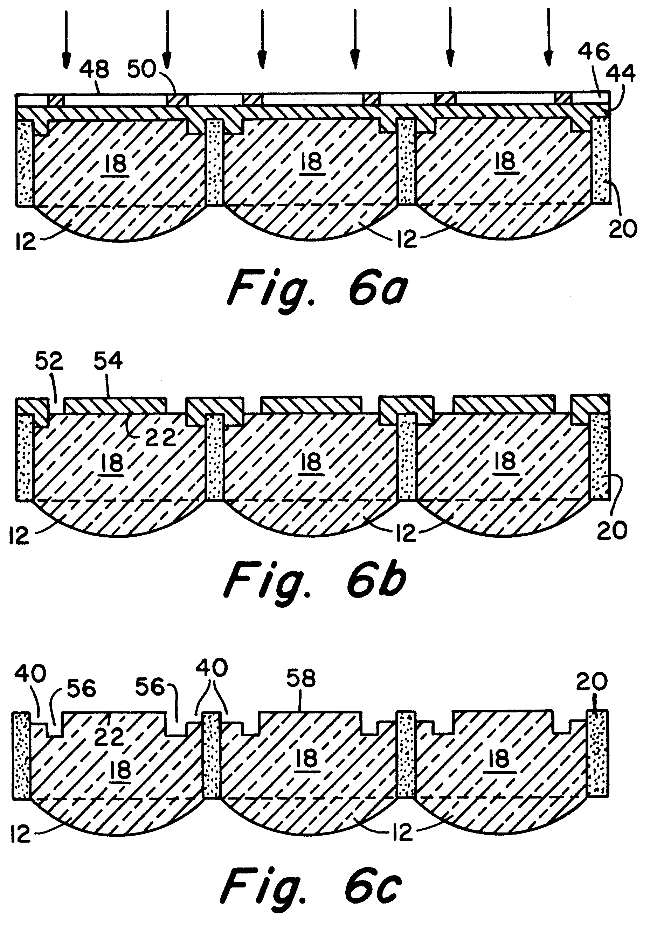

FIGURE 4 is a view in cross-section taken along line 4-4 in FIGURE 3. FIGURE 4 shows the depth and arrangement of steps 26 in a staircase fashion. It also shows, by a solid line drawn through steps 26, an idealized curved surface representing the mathematical deviation, $\phi$ (dev). As described above, this curve is collapsed to provide the stepped grating pattern 24. FIGURE 4 corresponds to FIGURE 2, except for the etching of diffraction grating pattern 24 onto plano surface 22 in a staircase fashion. The procedure is further described with reference to FIGURES 5A, 5B, 5C, 6A, 6B and 6C.

FIGURES 5A, 5B and 5C are views in cross-section of the optical element of FIGURE 2. They show the processing steps in forming the outermost annular step 26 of grating pattern 24.

FIGURE 5A shows a continuous layer 28 of photoresist applied over plano surface 22. It also shows a photomask 30 applied over photoresist layer and in alignment with modified optical element 10. Photomask 30 has opaque zones 32 and transparent zones 34. Radiation, as shown by arrows, sets the photoresist under zones 34 to render it insoluble while that under zones 32 is not exposed and hence remains soluble.

FIGURE 5B corresponds to FIGURE 5A with photomask 30 removed and the soluble photoresist under zones 32 dissolved to leave open zones 36 on plano surface 22 with the remainder of the surface covered by photoresist 38.

FIGURE 5C shows the optical element 10 with channels 40 etched in plano surface 22. Channels 40 correspond to open areas 36 in FIGURE 5B. Photoresist 38 is then removed to restore clear surface zones 42 on plano surface 22.

FIGURES 6A, 6B and 6C are also views in cross-section. They show the formation of a second annular step 26 adjacent the outermost surface, the formation of which is shown in FIGURES 5A, 5B and 5C. The processing steps of FIGURES 6A, 6B and 6C correspond to those of FIGURES 5A, 5B and 5C. The difference is only in the location of the clear and transparent zones.

FIGURE 6A is a view in cross-section showing the optical element of FIGURE 5C with a continuous photoresist layer 44 applied over the upper surface including channels 40. Photomask 46 is then aligned over photoresist layer 44. Photomask 46 has opaque zones 50 and transparent zones 48. It will be noted that opaque zones 50 are aligned adjacent to the inside wall of channels 40 and extending inwardly thereof. The optical element is then irradiated, as indicated by arrows, to render insoluble the photoresist under transparent zones 48.

FIGURE 6B is a view in cross-section corresponding to FIGURE 6A, but with photomask 46 removed and the soluble resist under opaque zones 50 dissolved to leave open zones 52 on plano surface 22 with the remainder of the surface covered by photoresist 54.

FIGURE 6C shows the optical element with channels 56 etched in plano surface 22 to a greater depth than channels 40 to form annular steps as also indicated in FIGURE 4. Channels 56 correspond to open areas 52 in FIGURE 6B. Photoresist 54 is then removed to restore clear surface zones 58 on plano surface 22.

While the formation of only two annular steps 26 has been shown, it will be understood that the process will be repeated as many times as required with the sole change being in the location of the opaque zones in the photomask and the consequent open areas on the photoresist to guide the etching step.

It should be appreciated that the alignment of a photomask is facilitated by the existing lens array pattern formed on the opposite face. Thus, an original photomask is used in producing the spherical lenses 12, in FIGURE 1, as described in the Bellman et al. patents. This photomask can then be used in the generation of the photomasks required for the etching steps, for example, photomasks 30 and 46 in FIGURES 5A and 6A. This relationship provides an assurance of complete alignment of the lenses and the grating patterns, for example, lenses 12 with patterns 24.

To form pattern 24, well known photolithographic practice, as used in forming electronic microcircuitry, is employed. Thus, a photoresist is first applied over plano surface 22. The photoresist is then covered with a photo mask with the grating patterns aligned with spherical lenses 12. This is necessary so that the etched steps 26 forming pattern 24 will be in alignment with microlens 12.

The photoresist is then exposed through the photo mask to selectively develop the pattern of the mask in the photoresist layer. The exposed and developed portions of the photoresist are then removed to expose corresponding portions of underlying glass surface 22. The exposed portions of surface 22 are then ion etched (ion beam or reactive ion etching) to a desired depth to form steps 26. Customarily, each step in the pattern is produced by a separate exposure and etching operation.

## Claims

1. A refractive/diffractive optical element for producing a wavefront that closely approximates a perfect spherical wavefront, the optical element comprising at least one spherical surface and a diffraction grating in opposed relationship to that spherical surface, and aligned therewith, the grating being composed of successive, annular steps at predetermined distances from the center of the grating, whereby the optical element is capable of producing a wavefront that is corrected and that is capable of diffraction-limited performance.

2. An optical element in accordance with claim 1 which is an integral body.

3. An optical element in accordance with claim 1 which comprises an array of spherical surfaces with a diffraction grating in opposed relationship to and aligned with each spherical surface.

4. An optical element in accordance with claim 3 wherein the array of spherical surfaces is formed on one surface of a photosensitive glass substrate and the diffraction gratings are formed on an opposite, plano surface of the substrate.

5. A method of making a refractive/diffractive element for producing a wavefront that closely approximates a perfect spherical wavefront which comprises forming arrays of spherical surfaces on opposite surfaces of a photosensitive glass substrate by a photolithographic process employing a photomask, removing one array of spherical surfaces to form a plano surface, forming an array of diffraction gratings on the plano surface, each diffraction grating being aligned with a spherical surface on the opposite surface of the element and each grating being composed of successive, annular steps at predetermined distances from the center of the grating, the annular steps being formed by a combination of photolithographic and etching steps.

6. A method in accordance with claim 5 wherein the annular steps are formed by applying layers of photoresist on the plano surface of the glass substrate, exposing portions of the photoresists to insolubilize such portions, removing the remaining portions of the photoresists to expose clear zones on the glass, and etching said clear zones to predetermined depths.

7. A method in accordance with claim 6 wherein the photomask used in the photolithographic process of producing the array of spherical surfaces is used in the generation of photomasks used in the photolithographic process to form etching patterns, whereby alignment of the spherical surfaces and the diffraction gratings is facilitated.

*Fig. 1* (PRIOR ART)

*Fig. 2*

EP 0 615 142 A1

Fig. 3

Fig. 4

*Fig. 5a*

*Fig. 5b*

*Fig. 5c*

Fig. 6a

Fig. 6b

Fig. 6c

European Patent Office

**EUROPEAN SEARCH REPORT**

Application Number

EP 94 10 2566

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-5 148 317 (J.S.FORESI) <br> * abstract; figure 1 * <br> --- | 1,2,5 | G02B5/18 <br> G02B27/00 <br> G02B3/00 |
| A | WO-A-91 12551 (MASSACHUSSETTS INSTITUTE OF TECHNOLOGY) <br> * abstract; claims 1-13; figure 2 * <br> --- | 1,2,5 | |
| A | EP-A-0 352 751 (FUJI PHOTO FILM) <br> * abstract; figure 1 * <br> --- | 1 | |
| P,A | EP-A-0 560 511 (AT&T) <br> * abstract; figures 4-6 * <br> ----- | 1,3,4 | |
| | | | TECHNICAL FIELDS SEARCHED (Int.Cl.5) <br><br> G02B |

The present search report has been drawn up for all claims

| Place of search | Date of completion of the search | Examiner |
|---|---|---|
| THE HAGUE | 18 May 1994 | Malic, K |

EPO FORM 1503 03.82 (P04C01)